# EUROPEAN PATENT SPECIFICATION

(11) **EP 3 586 447 B1**
(45) Date of publication and mention of the grant of the patent: **12.05.2021**
(21) Application number: 17712731.3
(22) Date of filing: 17.03.2017
(51) Int. Cl.: H04B 1/3816, H04M 1/02, G06K 13/08

(54) **TRAY ASSEMBLY FOR ELECTRONIC DEVICE**
ABLAGEANORDNUNG FÜR ELEKTRONISCHE VORRICHTUNG
ENSEMBLE PLATEAU DE DISPOSITIF ÉLECTRONIQUE

(43) Date of publication of application: 01.01.2020
(73) Proprietor: Huawei Technologies Co., Ltd., Longgang District Shenzhen, Guangdong 518129 (CN)
(72) Inventor: HEISKANEN, Juuso, 164 40 Kista (SE)
(74) Representative: Gill Jennings & Every LLP
(86) International application number: PCT/EP2017/056389
(87) International publication number: WO 2018/166624

(56) References cited:
- EP-A1- 2 993 869
- GB-A- 2 398 706
- US-A1- 2007 235 538
- US-A1- 2015 018 041

## Description

### TECHNICAL FIELD

The disclosure relates to a tray assembly for use in electronic devices, the tray being adapted for carrying at least one integrated circuit card.

### BACKGROUND

The housing of an electronic device, such as a mobile phone or a tablet, is usually provided with a recess adapted for receiving a tray assembly. The tray assembly comprises a tray, for carrying one or several cards such as SIM cards, SD cards, or memory cards, and a lid used for closing off the interior of the recess in order to prevent ingress of dirt etc. into the electronic device. The lid is connected to the tray such that, when removing the lid from the housing, the tray is removed from the recess.

When the recess is closed by the lid, the lid is firmly retained by the housing such that the tray or the card(s) cannot inadvertently fall out from within the recess. Such a lid may be released and ejected from the housing by means of a pin eject type mechanism.

GB2398706A describes improvements in mobile communication device security. A mobile communication device includes a keypad and a retractable holder for a smart card (e.g. a SIM card). The smart card holder contains a solenoid for locking the holder in a closed position. The device stores a security code which is associated with the smart card holder. When the user wishes to remove the smart card, they enter the security code onto the mobile device via the keypad. If the entered code is the same as the stored code, the mobile device energises the solenoid to allow the holder to be opened and the smart card to be replaced. If the code is entered incorrectly the smart card holder will be physically locked shut by the solenoid. The solenoids de-energised position is with the piston extended, therefore, even removal of the battery will result in the smart card holder remaining locked.

EP2993869A1, US2015018041A1 and US2007235538A1 provide further examples of the state of the art.

### SUMMARY

It is an object to provide an improved tray assembly, and an electronic device configured to receive such a tray assembly.

The foregoing and other objects are achieved by the features of the independent claims. Further implementation forms are apparent from the dependent claims, the description, and the figures.

According to a first aspect, there is provided a tray assembly comprising a tray and a lid, the tray comprising a main plane and being adapted for carrying at least one integrated circuit card, the lid being slidably connected to the tray to allow the lid to move relative to the tray in a direction along an axis of the main plane between a retracted position and an extended position relative to the tray, the lid being resiliently biased towards the extended position, the tray assembly further comprising a locking mechanism adapted for retaining the lid in the retracted position, and an electro-mechanical actuator configured to control the locking mechanism. Allowing the lid to move relative to the tray significantly reduces the friction forces to be overcome by the tray assembly, since only the lid is moved but not the complete tray assembly. This not only minimizes the required ejection force but also the size of the ejection related components. Further, the risk of ejection jamming is reduced due to the reduction in friction forces. Also, only low activation energy is needed for activating electro mechanical actuator, which is an advantage especially for handheld devices, when compared to a solution where the complete tray assembly is ejected by means of an electro mechanical actuator.

In a first possible implementation form of the first aspect, the locking mechanism comprises a first locking mechanism element arranged on the tray and a second locking mechanism element arranged on the lid. A two-part locking mechanism, arranged on tray and lid, both allows the lid to be moved relative to the tray and the lid and tray to interlock.

In a second possible implementation form of the first aspect, the first locking mechanism element and/or the second locking mechanism element is resiliently biased so that, in the biased position, the first locking mechanism element and the second locking mechanism element are engaged with each other holding the lid in the retracted position. A resiliently biased locking mechanism element facilitates automatic interlocking between elements in at least one position.

In a third possible implementation form of the first aspect, the second locking mechanism element extends in parallel with the main plane of the tray. Such a locking mechanism is space efficient since it does not require much space within the tray assembly, at least in one direction.

In a fourth possible implementation form of the first aspect, the first locking mechanism element and/or the second locking mechanism element comprises a plate extending in parallel with the main plane of the tray. A plate provides sufficient stiffness to the locking mechanism, while not being particularly space consuming.

In a fifth possible implementation form of the first aspect, the first locking mechanism element comprises a plate having a protrusion, extending at an obtuse angle from the plate, and the second locking mechanism element comprises a plate having a recess adapted for receiving the protrusion when the lid is in the retracted position. The use of an interlocking recess and protrusion is a space efficient, simple, and reliable solution which does not require separate moving parts.

In a sixth possible implementation form of the first aspect, the electro-mechanical actuator comprises an SMA, shape memory alloy, component. SMA is a lightweight, solid-state actuator, conveniently actuated by means of electricity.

In a seventh possible implementation form of the first aspect, the SMA component comprises an SMA wire. An SMA wire compresses when heated by means of electricity and can be stretched back to its original length after cooling.

In an eight possible implementation form of the first aspect, the electro-mechanical actuator is configured to move the resiliently biased locking mechanism element against its bias when the SMA component is electrically activated. This allows the locking mechanism element to be moved by means of a reliable and space efficient mechanism.

In a ninth possible implementation form of the first aspect, the tray assembly further comprises contact pads and/or contact springs, arranged on the tray, for electrically activating the electro-mechanical actuator. The placement of the contact pads/springs on the tray allows the electro-mechanical actuator to be activated when the lid is arranged in a certain position in relation to the tray.

In a tenth possible implementation form of the first aspect, the first locking mechanism element is released from the second locking mechanism element when the resiliently biased locking mechanism element is moved against its bias. This solution not only allows the lid to be released from, and moved relative to, its extended position, but also positions the biased locking mechanism element such that both locking mechanism elements easily interlock when the lid is moved back to its original, retracted position.

In an eleventh possible implementation form of the first aspect, the lid is pushed to the extended position by means of a resiliently biased spring extending between the tray and lid. A resiliently biased spring facilitates automatic movement of the lid to the extended position, reducing the number of steps needed to operate the tray assembly.

In a twelfth possible implementation form of the first aspect, first and second ends of the SMA wire are electrically connected to at least one component of the tray assembly, the rest of the SMA wire being electrically insulated from the assembly. When only the ends of the SMA wire are electrically connected to the tray assembly, there is a reduced risk of unintentionally activating the SMA wire.

In a thirteenth possible implementation form of the first aspect, the tray and lid are configured to move in unison when the lid has reached the extended position or the retracted position. This allows the tray to be pulled outwards from the recess in which it is located without the use of additional ejection components.

In a fourteenth possible implementation form of the first aspect, the tray is provided with stop means configured such that the lid does not detach from the tray when in the extended position. This allows the tray to be removed from the recess without applying any other force than the manual force applied by the user onto the lid.

According to a second aspect, there is provided an electronic device configured to receive a tray assembly according to the above, the electronic device comprising a housing, housing contact pads, and a processor, the processor being adapted for activating the electro-mechanical actuator of the tray assembly in response to a user tray ejection signal and by means of an unlocking signal transmitted from the housing contact pads to contact pads and/or contact springs arranged on the tray assembly. An electronic device adapted for receiving a tray assembly such as that above will allow the user to change card(s) easily, contributing to an increased user satisfaction.

In a first possible implementation of the second aspect, the electro-mechanical actuator is activated such that the lid of the tray assembly is allowed to move from the retracted position to the extended position, allowing access to the integrated circuit card(s). Allowing the lid to move relative to the tray significantly reduces the ejection friction to be overcome, since only the lid is moved.

In a second possible implementation of the second aspect, the unlocking signal comprises current and/or voltage.

In a third possible implementation form of the second aspect, the tray is adapted for carrying at least one integrated circuit card, preferably two integrated circuit cards. This allows the tray assembly to be used for different combinations of SD, SIM, and memory cards.

In a fourth possible implementation form of the second aspect,
the housing contact pads are adapted for being in contact with the contact pads and/or contact springs arranged on the tray when the lid is in the retracted position. In a further implementation the housing contact pads can in addition be adapted for being in contact with the contact pads and/or contact springs arranged on the tray when the lid is in the extended position.

In a fifth possible implementation form of the second aspect,
The electronic device further comprises means for interrupting transmission of the unlocking signal from the housing contact pads and/or contact springs to contact pads and/or contact springs arranged on the tray. This allows the electro-mechanical actuator to be activated only when the lid is arranged in the retracted position, reducing the usage of the electro-mechanical actuator and hence increasing its lifetime.

In a sixth possible implementation form of the second aspect, the electronic device further comprises the tray assembly.

According to a third aspect, there is provided a method for operating a tray assembly of an electronic device, the tray assembly comprising a tray and a lid, the lid being resiliently biased against the tray in a retracted position, the method comprising the steps of executing an access command on the electronic device, providing electrical current to an electro-mechanical actuator such that the actuator is activated, the activated electro-mechanical actuator releasing a locking mechanism, whereby the lid is moved, relative to the tray, from the retracted position to an extended position. Allowing the lid to move relative to the tray significantly reduces the friction forces to be overcome by the tray assembly, since only the lid is moved. This not only minimizes the required ejection force but also the size of the ejection related components. Further, the risk of ejection jamming is reduced due to the reduction in friction forces.

In a first possible implementation form of the third aspect, at least one element of the locking mechanism is moved in a direction perpendicular to a main plane of the tray, and wherein the lid is moved in a direction along an axis of the main plane. This facilitates a space efficient and simple solution for interlocking the locking mechanism elements without influencing the movement of the lid relative to the tray.

In a second possible implementation form of the third aspect, the electro-mechanical actuator is deactivated when the lid moves from the retracted position to the extended position. This allows at least one element of the locking mechanism to return to its initial position while the lid is in the extended position.

In a fourth possible implementation form of the third aspect, activation of the electro-mechanical actuator comprises converting the actuator from a first state to a second state, and deactivation of the electro-mechanical actuator comprises returning the electro-mechanical actuator to the first state. A solution having an automatic return function reduces the number of active steps needing to be taken.

In a fifth possible implementation form of the third aspect, the electro-mechanical actuator comprises an SMA (shape memory alloy) wire. SMA is a lightweight, solid-state actuator, easily actuated by means of electricity.

In a sixth possible implementation form of the third aspect, the SMA wire is returned to the first state by means of the element of the locking mechanism. The automatic return of the SMA wire to its initial state by means of a locking mechanism element removes a need for a separate component related to such transformation from the second state to the initial, first state.

In a seventh possible implementation form of the third aspect, the method further comprises the steps of moving the lid from the extended position to the retracted position by means of applying manual force onto the lid, the locking mechanism locking the lid to the tray when the retracted position has been reached. This allows the lid and tray to be inserted into the housing of an electronic device without use of any additional component and any force other than that applied manually by the user.

These and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows an elevated view of a tray assembly in accordance with one embodiment of the present invention;
Fig. 2 shows a top schematic view of an electronic device in accordance with another embodiment of the present invention;
Fig. 3 shows an elevated view of an interior section of the embodiment shown in Fig. 1;
Fig. 4a shows a top view of the interior section shown in Fig. 3, in a retracted position;
Fig. 4b shows a top view of the interior section shown in Fig. 1, in an extended position;
Fig. 5a shows a partial, cross-sectional view of the embodiment shown in Fig. 1, in a locked, retracted position;
Fig. 5b shows a partial, cross-sectional view of the embodiment shown in Fig. 1, in an unlocked, yet still retracted, position;
Fig. 5c shows a partial, cross-sectional view of the embodiment shown in Fig. 1, in an unlocked, extended position;
Fig. 6a shows a cross-sectional view of the embodiment shown in Fig. 1, wherein the electro-mechanical actuator is not activated; and
Fig. 6b shows a cross-sectional view of the embodiment shown in Fig. 1, wherein the electro-mechanical actuator is activated;
Fig. 7 shows a top view of the tray assembly shown in Fig. 1, along with an interior section of the electronic device.

### DETAILED DESCRIPTION

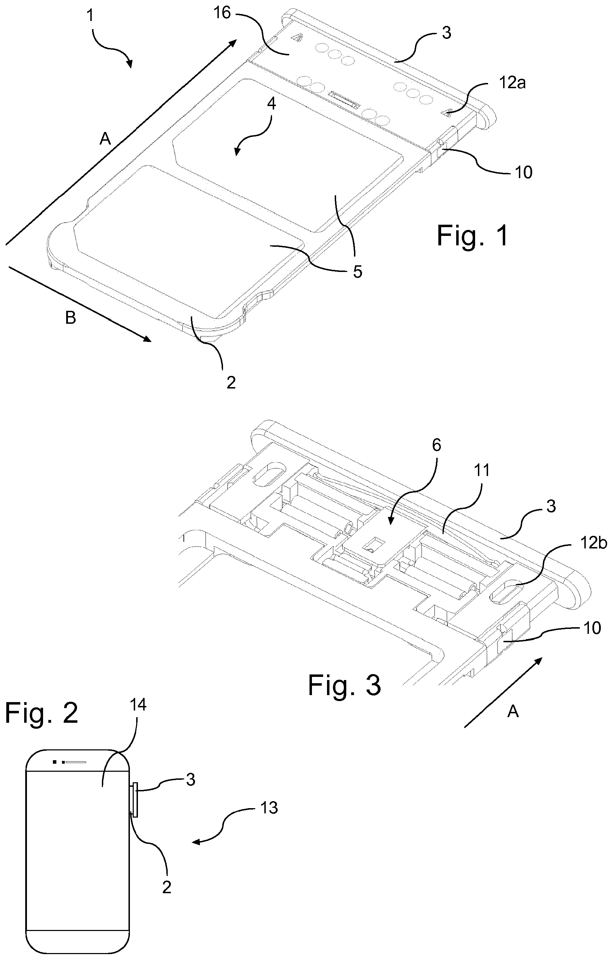

Fig. 1 shows a tray assembly 1 comprising a tray 2 and a lid 3. The tray 2 comprises a main plane 4 which extends mainly in two directions, i.e. in the direction of the first axis A (length) and in the direction of the second axis B (width), axis B being perpendicular to axis A. The tray 2 also extends in the direction of a third axis (height), perpendicular to both axes A and B. The height is however significantly smaller that both the length and the width of the main plane 4 of the tray 5. The tray 2 is adapted for carrying at least one integrated circuit card 5. E.g. the tray 2 comprises at least one card slot for receiving the integrated circuit card 5. Fig. 1 shows an embodiment for carrying two integrated circuit cards 5, i.e. having two separate card slots. The lid 3 is arranged at one end of the tray 2, extending essentially perpendicular to the tray 2, in the direction of the above mentioned third axis, such that when the tray is fully inserted into a recess in the housing 14 of an electronic device 13, the lid 3 seals off the entry into the recess.

Fig. 2 shows an electronic device 13, its housing 14, a tray 2 partially inserted into a recess extending into the side of the housing 14, and a lid 3 adapted for sealing the recess such that the lid, when the tray 2 is fully inserted into the recess, aligns with the side of the housing 14.

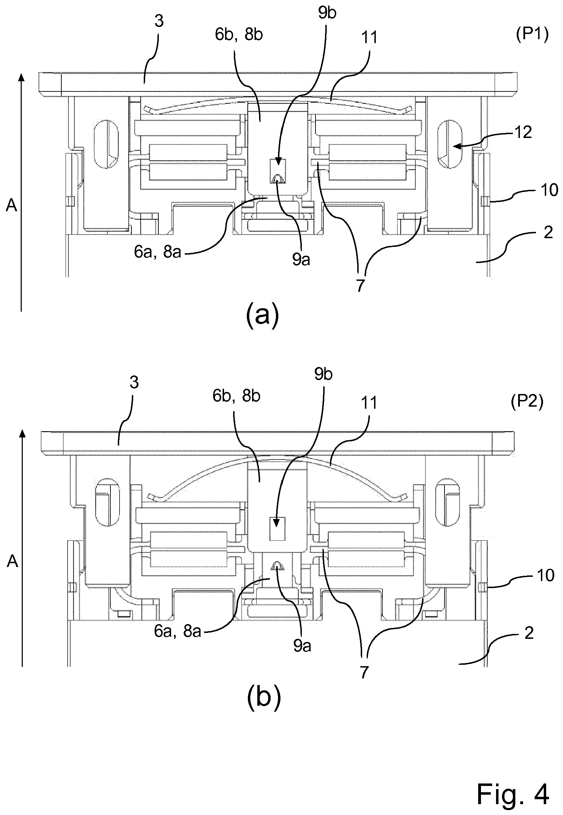

The tray may comprise a cover 16 e.g. (a metal cover 16) which surrounds a part of the tray interior such as the part between the lid and card slot(s), shown in Fig. 1. Fig. 3 shows a tray without such a metal cover 16. The lid 3 is slidably connected to the tray 2 in order to allow the lid 3 to move relative to the tray 2 in the direction along the axis A of the main plane 4. This enables the lid 3, to protrude out of the housing 14 of the electronic device 13, but with the card slots remaining in their position. As shown in Figs. 4a to 4b, the movement is executed, relative to the tray, between two end positions, a retracted position P1 and an extended position P2. The tray assembly 1 is provided with a locking mechanism 6 in order to retain the lid 3 in the retracted position P1, and with an electro-mechanical actuator 7 configured to control the locking mechanism 6.

The lid 3 is resiliently biased towards the extended position P2 e.g. by means of a resiliently biased spring 11 which extends between the tray 2 and lid 3, and which is adapted for moving the lid 3 from the retracted position P1 to the extended position P2. In one embodiment, the resiliently biased spring 11 is an elongate, concave spring, as seen from the main plane 4. The opposing ends of the concave spring 11 are in contact with the tray 2, and the center of the concave spring 11 is in contact with the lid 3. The spring 11 is biased by compressing it between tray 2 and lid 3, when the lid 3 is in the retracted position P1. This is shown in Fig. 4a.

When the locking mechanism 6 is released, as shown in Fig. 4b, the resiliently biased spring 11 pushes the lid 3 from the retracted position P1, where the lid 3 is aligned with the side of the housing 14, to the extended position P2, where the lid protrudes from the housing such that the user can grab the lid 3 and pull it further outwards in order to access the tray and any integrated circuit card(s) 5 located therein.

In one embodiment, the electro-mechanical actuator 7 comprises an SMA, shape memory alloy, component, preferably an SMA wire. The first and second ends of the SMA wire are electrically connected to at least one component of the tray assembly 1, while the rest of the SMA wire is electrically insulated from the tray assembly 1. In one embodiment, the SMA wire is connected to contact pads and/or contact springs 10, arranged on opposing sides of the tray 2, shown in Fig. 3. The contact pads and/or contact springs 10 activate the electro-mechanical actuator/SMA wire 7 by transferring electricity, i.e. current and/or voltage, from contact pads arranged on the housing 14 of the electronic device 13 to the electro-mechanical actuator/SMA wire 7. The current flowing through the SMA wire leads to temperature change of the SMA wire 7 and thereby to change in the length of the SMA wire 7.

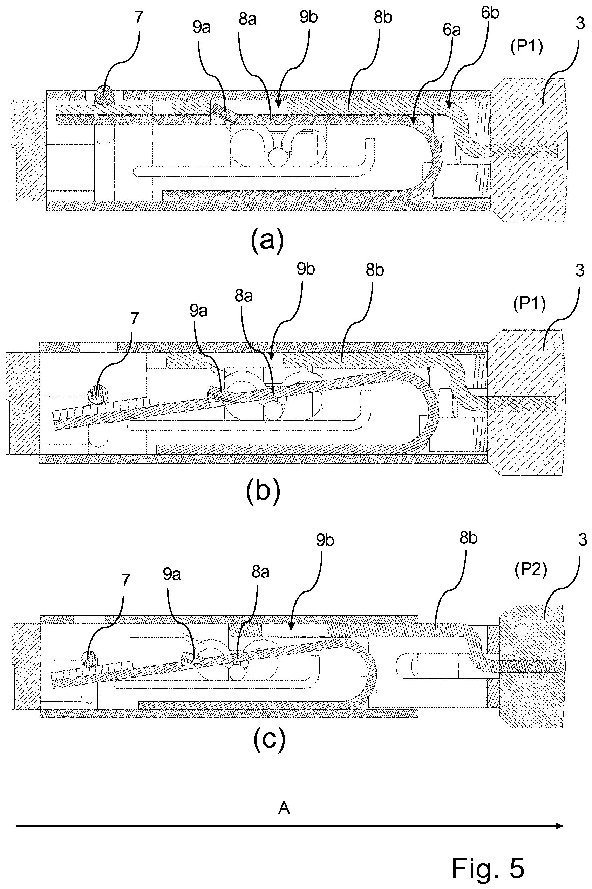

The locking mechanism 6 and its function will now be described in more detail, with reference to Figs. 4a-4b, as well as Figs. 5a-5c.

In one embodiment, the locking mechanism 6 comprises a first locking mechanism element 6a arranged on the tray 2 and a second locking mechanism element 6b arranged on the lid 3. The first locking mechanism element 6a and/or the second locking mechanism element 6b is resiliently biased so that, in the biased position shown in Figs. 4a and 5a, the first locking mechanism element 6a and the second locking mechanism element 6b are engaged with each other, holding the lid 3 in the retracted position P1.

The second locking mechanism element 6b extends essentially in parallel with the main plane 4 of the tray 2. In one embodiment, the second locking mechanism element 6b comprises a plate which extends from the lid 3. In yet another embodiment, the first locking mechanism element 6a also comprises a plate extending in parallel with the main plane 4 of the tray 2, and in parallel with the second locking mechanism element 6b, as long as the lid 3 is in the retracted position P1.

In one embodiment, the first locking mechanism element 6a comprises a plate 8a having a protrusion 9a, extending at an obtuse angle α from the plate 8a, such that the protrusion 9a is at least partially directed towards the second locking mechanism element 6b. The second locking mechanism element 6b comprises a plate 8b having a recess 9b adapted for receiving the protrusion 9a when the lid 3 is in the retracted position P1. The angle α is such that the protrusion 9a is in contact with the inner edge of the recess 9b, the edge farthest from the lid 3, such that the lid 3 is completely stationary in relation to the tray 2, when in the retracted position P1. See Fig. 5a.

The previously mentioned electro-mechanical actuator 7 is configured to move the resiliently biased locking mechanism element, in one embodiment being the first locking mechanism element 6a/plate 8a, against its bias as shown in Figs. 5b and 5c. The first locking mechanism element 6a/plate 8a is pulled, in a direction from the second locking mechanism element 6b/plate 8b, by the electro-mechanical actuator/SMA wire 7 when it is electrically activated.

In other words, the first locking mechanism element 6a/plate 8a is released from the second locking mechanism element 6b/plate 8b when the resiliently biased locking mechanism element 6a/plate 8a is moved against its bias. This allows the lid 3 of the tray assembly 1 to move from the retracted position P1 to the extended position P2, facilitating access to the one or several integrated circuit card(s).

In one embodiment, the plates 8a and 8b have lengths, extending in the direction of axis A, which are adapted such that, in the extended position P2, the plate 8a can return to its initial biased position, parallel with the main plane 4 of the tray 2, without its protrusion 9a coming into contact with the plate 8b. See Fig. 5c.

The lid 3 is returned to the retracted position P1 by means of manual force applied onto the lid by the user in order to insert the tray 2 into the recess in the housing 14. During this return movement, the plate 8b slides past the plate 8a and the protrusion 9a, the plate 8a now being in its biased position, and pushes the plate 8a slightly in a direction against its bias such that the plate 8b can pass all the way into the housing 14 past the protrusion 9a. When the recess 9b reaches a position which corresponds to that of the protrusion 9a, the plate 8a is no longer pushed against its bias and returns to the biased position, whereby the protrusion 9a and the recess 9b interlock.

In one embodiment, the tray 2 and the lid 3 are configured to move in unison when the lid 3 has reached the extended position P2 or the retracted position P1. I.e., when the lid 3 has reached the extended position P2 and the user grabs the lid 3 and pulls on it, the complete tray 2 is pulled outwards, manually by the user, from the housing of the electronic device 13 along with the lid 3. This is achieved, in one embodiment, by providing the tray 2 with stop means 12 shown in Fig. 4a and configured such that the lid 3 does not detach from the tray 2 when in the extended position P2. The stop means may comprise two protrusions 12a shown in Fig. 1, extending from the metal cover 16 and arranged such that they slide within a groove 12b shown in Fig. 3. In this embodiment protrusions 12a and groove 12b and arranged on each side of the tray 2. However, in another embodiment also only one protrusion 12a and one groove 12b can be foreseen.

When the lid 3 instead had reached the retracted position P1, after the user has pushed the lid 3 inwards into the housing of the electronic device 13, the tray 2 and lid 3 are interlocked by means of the above described locking means 6.

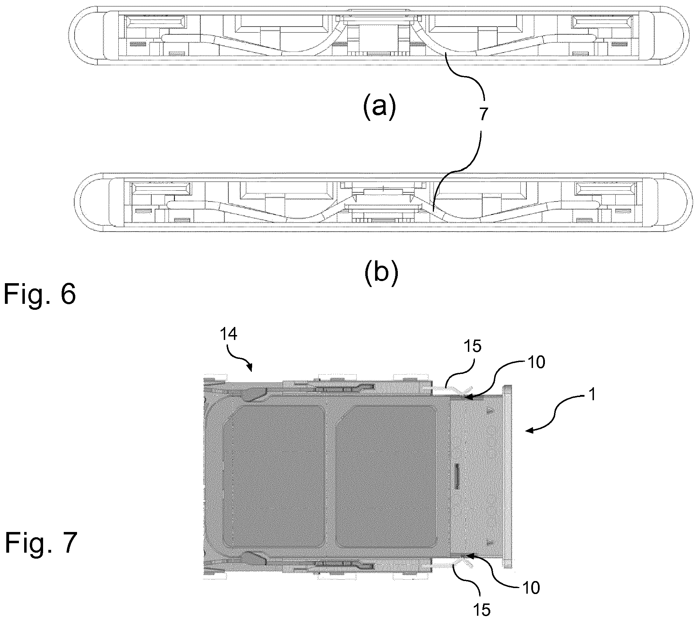

Fig.2 shows a schematic drawing of an electronic device 13, such as a mobile device (e.g. mobile phone, smart phone, tablet, laptop or similar), configured to receive the above described tray assembly 1. The electronic device comprises a housing 14, housing contact pads and/or contact springs 15 shown in Fig. 7, and a processor. The processor is adapted for activating the electro-mechanical actuator 7 of the tray assembly 1 in response to a user tray ejection signal, e.g. initiated by the user pressing a soft key on the display of the electronic device 13. The user tray ejection signal initiates transmission of an unlocking signal from the housing contact pads 15 to contact pads and/or contact springs 10 arranged on the tray assembly 1. Subsequently, the contact pads and/or contact springs 10 initiate transmission of electrical current to the electro-mechanical actuator 7.

The housing contact pads and/or contact springs 15 are separate from contact pads and/contact springs of the mobile device for contacting the integrated circuit card(s) carried by the tray 2. Typically the contact pads and/or contact springs 15 can be designed so that they are configured to not transmit or receive digital signals, but only provide current/voltage for activation of the electromechanical actuator 7.

The housing contact pads and/or contact springs 15, shown in Fig. 7, can be arranged in the housing such that they are in contact with the contact pads and/or contact springs 10 arranged on the tray 2 both when the lid 3 is in the retracted position P1 and when the lid 3 is in the extended position P2.

The above disclosed tray assembly 1 is operated by means of the following steps.

An access command is executed, by the user, on the electronic device 13. For example, the user pushes a soft key on the display of the device. This access command initiates provision of electrical current to the electro-mechanical actuator 7 of the tray assembly 1, such that the actuator is activated. In one embodiment, the electro-mechanical actuator 7 comprises an SMA wire which is heated, by means of current flowing through it, such that it compresses and therefore pulls one locking mechanism element, e.g. plate 8a, in a direction away from another corresponding, locking mechanism element, e.g. plate 8b. The activated electro-mechanical actuator 7 hence releases the locking mechanism 6, whereby the lid 3 is moved, relative to the tray 2, from a retracted position P1 to an extended position P2 du to the bias of the compressed spring 11.

In one embodiment, the method also comprises the step of moving at least one of the locking mechanism elements 6a, 6b/plates 8a, 8b in a direction perpendicular to the main plane 4 of the tray 2, whereafter the lid 3 is moved in a direction along an axis A of the main plane 4. For example, the first locking mechanism element 6a/plate 8a may be moved in a direction from the second locking mechanism element 6b/plate 8b, in a direction perpendicular to the main plane 4 of the tray 2.

In a further embodiment, the electro-mechanical actuator 7 is deactivated when the lid 3 is moved from the retracted position P1 to the extended position P2. In one embodiment, the deactivation is executed using means for interrupting transmission of the unlocking signal from the housing contact pads 15 to contact pads and/or contact springs 10. The means for interrupting may comprise of a delay time, e.g. 1 s, programmed into the electronic device software. It may further comprise a tray detection switch arranged inside the electronic device, e.g. interrupting transmission when the tray 2 is ejected by approximately 0,5 mm.

Activation of the electro-mechanical actuator 7 comprises bringing the actuator from a first state to a second state, and deactivation of the electro-mechanical actuator 7 comprises returning the actuator from the second state to the first state. For example, when the electro-mechanical actuator 7 comprises an SMA wire, the SMA wire is activated, i.e. heated, by means of current. When heated, the wire compresses, by which the resiliently biased first locking mechanism element 6a/plate 8a is moved in a direction, against its bias, away from the second locking mechanism element 6b/plate 8b. When the SMA wire has cooled, it may be stretched back to its original length by means of the first locking mechanism element 6a/plate 8a which returns, due to the mentioned resilient bias, back to its initial position in parallel with the main plane 4 of the tray 2 and in abutment with the second locking mechanism element 6b/plate 8b.

The method may comprise additional steps. In one embodiment, the lid 3 is moved from the extended position P2 to the retracted position P1 by means of applying manual force onto the lid 3, the locking mechanism 6 locks the lid 3 to the tray 2 when the retracted position P1 has been reached. This is achieved as the protrusion 9a interlocks with the recess 9b.

Figs. 6a and 6b show an electro-mechanical actuator 7 in the form of an SMA wire in when the lid is in the retracted position P1, Fig. 6a, and in the extended position P2, Fig. 6b. Fig. 6b shows a heated, i.e. compressed, SMA wire.

The various aspects and implementations has been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A tray assembly (1) comprising:
a tray (2) and a lid (3),
said tray comprising a main plane (4) and being adapted for carrying at least one integrated circuit card (5),
said tray assembly (1) further comprising a locking mechanism (6) adapted for retaining said lid (3) in said retracted position (PI), and
an electro-mechanical actuator (7) configured to control said locking mechanism (6),
**characterized in that**
said lid (3) is slidably connected to said tray (2) to allow said lid (3) to move relative to said tray (2) in a direction along an axis (A) of said main plane (4) between a retracted position (P1) and an extended position (P2) relative to said tray, and
said lid (3) is resiliently biased towards said extended position (P2).

2. The tray assembly (1) according to claim 1, wherein said locking mechanism (6) comprises a first locking mechanism element (6a) arranged on said tray (2) and a second locking mechanism element (6b) arranged on said lid (3).

3. The tray assembly (1) according to claim 2, wherein said first locking mechanism element (6a) and/or said second locking mechanism element (6b) is resiliently biased so that, in the biased position, the first locking mechanism element (6a) and the second locking mechanism element (6b) are engaged with each other holding the lid (3) in said retracted position (P1).

4. The tray assembly (1) according to claim 2 or 3, wherein said second locking mechanism element (6b) extends in parallel with the main plane (4) of said tray (2).

5. The tray assembly (1) according to any one of claims 2 to 4, wherein said first locking mechanism element (6a) comprises a plate (8a) having a protrusion (9a), extending at an obtuse angle from said plate (8a), and said second locking mechanism element (6b) comprises a plate (8b) having a recess (9b) adapted for receiving said protrusion (9a) when said lid (3) is in said retracted position (P1).

6. The tray assembly (1) according to any one of the preceding claims, wherein said electro-mechanical actuator (7) comprises an SMA, shape memory alloy, component.

7. The tray assembly (1) according to claim 6, wherein said electro-mechanical actuator (7) is configured to move said resiliently biased locking mechanism element (6a, 6b) against its bias when said SMA component is electrically activated.

8. The tray assembly (1) according to any one of the preceding claims, further comprising contact pads and/or contact springs (10), arranged on said tray (2), for electrically activating said electro-mechanical actuator (7).

9. The tray assembly (1) according to any one of claims 4 to 8, wherein said first locking mechanism element (6a) is released from said second locking mechanism element (6b) when said resiliently biased locking mechanism element (6a, 6b) is moved against its bias.

10. The tray assembly (1) according to any one of the preceding claims, wherein said lid (3) is pushed to said extended position (P2) by means of a resiliently biased spring (11) extending between said tray (2) and lid (3).

11. The tray assembly (1) according to any one of the preceding claims, wherein said tray (2) and lid (3) are configured to move in unison when said lid (3) has reached said extended position (P2) or said retracted position (P1).

12. The tray assembly (1) according to any one of the preceding claims, wherein said tray (2) is provided with stop means (12) configured such that said lid (3) does not detach from said tray (2) when in said extended position (P2).

13. An electronic device (13) configured to receive a tray assembly (1) according to any one of claims 8-12,
said electronic device comprising a housing (14), housing contact pads and/or contact springs (15), and a processor,
said processor being adapted for activating an electro-mechanical actuator (7) of said tray assembly (1) in response to a user tray ejection signal and by means of an unlocking signal transmitted from said housing contact pads (15) to contact pads and/or contact springs (10) arranged on said tray assembly (1).

14. The electronic device (13) according to claim 13, wherein said housing contact pads and/or contact springs (15) are adapted for being in contact with the contact pads and/or contact springs (10) arranged on said tray (2) when said lid (3) is in said retracted position (P1).

15. The electronic device (13) according to claim 13 or 14, further comprising means for interrupting transmission of said unlocking signal from said housing contact pads and/or contact springs (15) to contact pads and/or contact springs (10).

## Patentansprüche

1. Fachanordnung (1), die Folgendes umfasst:
ein Fach (2) und einen Deckel (3), wobei das Fach eine Hauptebene (4) umfasst und zum Tragen wenigstens einer Chipkarte (5) angepasst ist,
wobei die Fachanordnung (1) ferner einen Verriegelungsmechanismus (6), der zum Festhalten des Deckels (3) in der zurückgezogenen Position (P1) angepasst ist, und einen elektromechanischen Aktuator (7) umfasst, der konfiguriert ist, um den Verriegelungsmechanismus (6) zu steuern,
**dadurch gekennzeichnet, dass**
der Deckel (3) verschiebbar mit dem Fach (2) verbunden ist, um es dem Deckel (3) zu ermöglichen, sich relativ zu dem Fach (2) in einer Richtung entlang einer Achse (A) der Hauptebene (4) zwischen einer zurückgezogenen Position (P1) und einer erstreckten Position (P2) relativ zu dem Fach zu bewegen, und
der Deckel (3) zu der erstreckten Position (P2) hin elastisch vorgespannt ist.

2. Fachanordnung (1) nach Anspruch 1, wobei der Verriegelungsmechanismus (6) ein erstes Verriegelungsmechanismuselement (6a), das auf dem Fach (2) eingerichtet ist, und ein zweites Verriegelungsmechanismuselement (6b) umfasst, das auf dem Deckel (3) eingerichtet ist.

3. Fachanordnung (1) nach Anspruch 2, wobei das erste
Verriegelungsmechanismuselement (6a) und/oder das zweite Verriegelungsmechanismuselement (6b) elastisch vorgespannt ist, so dass in der vorgespannten Position das erste Verriegelungsmechanismuselement (6a) und das zweite Verriegelungsmechanismuselement (6b) miteinander in Eingriff stehen und den Deckel (3) in der zurückgezogenen Position (P1) halten.

4. Fachanordnung (1) nach Anspruch 2 oder 3, wobei sich das zweite Verriegelungsmechanismuselement (6b) parallel zu der Hauptebene (4) des Fachs (2) erstreckt.

5. Fachanordnung (1) nach einem der Ansprüche 2 bis 4, wobei das erste Verriegelungsmechanismuselement (6a) eine Platte (8a) umfasst, die einen Vorsprung (9a) aufweist, der sich in einem stumpfen Winkel aus der Platte (8a) erstreckt, und das zweite Verriegelungsmechanismuselement (6b) eine Platte (8b) umfasst, die eine Aussparung (9b) aufweist, die zum Aufnehmen des Vorsprungs (9a) angepasst ist, wenn sich der Deckel (3) in der zurückgezogenen Position (P1) befindet.

6. Fachanordnung (1) nach einem der vorhergehenden Ansprüche, wobei der elektromechanische Aktuator (7) eine Formgedächtnislegierungs(shape *memory alloy* - SMA)-Komponente umfasst.

7. Fachanordnung (1) nach Anspruch 6, wobei der elektromechanische Aktuator (7) konfiguriert ist, um das elastisch vorgespannte Verriegelungsmechanismuselement (6a, 6b) gegen seine Vorspannung zu bewegen, wenn die SMA-Komponente elektrisch aktiviert wird.

8. Fachanordnung (1) nach einem der vorhergehenden Ansprüche, die ferner Kontaktinseln und/oder Kontaktfedern (10) umfasst, die auf dem Fach (2) zum elektrischen Aktivieren des elektromechanischen Aktuators (7) eingerichtet sind.

9. Fachanordnung (1) nach einem der Ansprüche 4 bis 8, wobei das erste Verriegelungsmechanismuselement (6a) von dem zweiten Verriegelungsmechanismuselement (6b) freigegeben wird, wenn das elastisch vorgespannte Verriegelungsmechanismuselement (6a, 6b) gegen seine Vorspannung bewegt wird.

10. Fachanordnung (1) nach einem der vorhergehenden Ansprüche, wobei der Deckel (3) in die erstreckte Position (P2) mittels einer elastisch vorgespannten Feder (11) gedrückt wird, die sich zwischen dem Fach (2) und dem Deckel (3) erstreckt.

11. Fachanordnung (1) nach einem der vorhergehenden Ansprüche, wobei das Fach (2) und der Deckel (3) konfiguriert sind, um sich im Einklang zu bewegen, wenn der Deckel (3) die erstreckte Position (P2) oder die zurückgezogene Position (P1) erreicht hat.

12. Fachanordnung (1) nach einem der vorhergehenden Ansprüche, wobei das Fach (2) mit Anschlagmitteln (12) versehen ist, die derart konfiguriert sind, dass sich der Deckel (3) nicht von dem Fach (2) löst, wenn er sich in der erstreckten Position (P2) befindet.

13. Elektronische Vorrichtung (13), die konfiguriert ist, um eine Fachanordnung (1) nach einem der Ansprüche 8-12 aufzunehmen,
wobei die elektronische Vorrichtung ein Gehäuse (14), Gehäusekontaktinseln und/oder -kontaktfedern (15) und einen Prozessor umfasst,
wobei der Prozessor zum Aktivieren eines elektromechanischen Aktuators (7) der Fachanordnung (1) als Reaktion auf ein Benutzerfachauswurfsignal und mittels eines Entriegelungssignals angepasst ist, das von den Gehäusekontaktinseln (15) an Kontaktinseln und/oder Kontaktfedern (10) übertragen wird, die auf der Fachanordnung (1) eingerichtet sind.

14. Elektronische Vorrichtung (13) nach Anspruch 13, wobei die Gehäusekontaktinseln und/oder -kontaktfedern (15) für ein Inkontaktstehen mit den Kontaktinseln und/oder Kontaktfedern (10) angepasst sind, die auf dem Fach (2) eingerichtet sind, wenn sich der Deckel (3) in der zurückgezogenen Position (P1) befindet.

15. Elektronische Vorrichtung (13) nach Anspruch 13 oder 14, die ferner Mittel zum Unterbrechen einer Übertragung des Entriegelungssignals von den Gehäusekontaktinseln und/oder -kontaktfedern (15) zu Kontaktinseln und/oder Kontaktfedern (10) umfasst.

## Revendications

1. Ensemble plateau (1) comprenant :
un plateau (2) et un couvercle (3), ledit plateau comprenant un plan principal (4) et
étant conçu pour transporter au moins une carte de circuit intégré (5), ledit ensemble plateau (1) comprenant en outre un mécanisme de verrouillage (6) conçu pour retenir ledit couvercle (3) dans ladite position rétractée (P1), et un actionneur électromécanique (7) configuré pour commander ledit mécanisme de verrouillage (6),
**caractérisé en ce que** ledit couvercle (3) est relié de manière coulissante audit plateau (2) pour permettre audit couvercle (3) de se déplacer par rapport audit plateau (2) dans une direction le long d'un axe (A) dudit plan principal (4) entre une position rétractée (P1) et une position déployée (P2) par rapport audit plateau, et **en ce que** ledit couvercle (3) est sollicité de manière élastique vers ladite position déployée (P2).

2. Ensemble plateau (1) selon la revendication 1, dans lequel ledit mécanisme de verrouillage (6) comprend un premier élément de mécanisme de verrouillage (6a) disposé sur ledit plateau (2) et un second élément de mécanisme de verrouillage (6b) disposé sur ledit couvercle (3).

3. Ensemble plateau (1) selon la revendication 2, dans lequel ledit premier élément de mécanisme de verrouillage (6a) et/ou ledit second élément de mécanisme de verrouillage (6b) est sollicité de manière élastique de sorte que, dans la position sollicitée, le premier élément de mécanisme de verrouillage (6a) et le second élément de mécanisme de verrouillage (6b) sont en prise l'un avec l'autre, maintenant ainsi le couvercle (3) dans ladite position rétractée (P1).

4. Ensemble plateau (1) selon la revendication 2 ou 3, dans lequel ledit second élément de mécanisme de verrouillage (6b) s'étend parallèlement au plan principal (4) dudit plateau (2).

5. Ensemble plateau (1) selon l'une quelconque des revendications 2 à 4, dans lequel ledit premier élément de mécanisme de verrouillage (6a) comprend une plaque (8a) présentant une saillie (9a) s'étendant à un angle obtus à partir de ladite plaque (8a), et ledit second élément de mécanisme de verrouillage (6b) comprend une plaque (8b) présentant un évidement (9b) conçu pour recevoir ladite saillie (9a) lorsque ledit couvercle (3) est dans ladite position rétractée (P1).

6. Ensemble plateau (1) selon l'une quelconque des revendications précédentes, dans lequel ledit actionneur électromécanique (7) comprend un composant d'alliage à mémoire de forme, SMA.

7. Ensemble plateau (1) selon la revendication 6, dans lequel ledit actionneur électromécanique (7) est configuré pour déplacer ledit élément de mécanisme de verrouillage (6a, 6b) sollicité de manière élastique à l'encontre de la sollicitation exercée sur lui lorsque ledit composant SMA est activé électriquement.

8. Ensemble plateau (1) selon l'une quelconque des revendications précédentes, comprenant en outre des plots de contact et/ou des ressorts de contact (10) disposés sur ledit plateau (2) pour activer électriquement ledit actionneur électromécanique (7).

9. Ensemble plateau (1) selon l'une quelconque des revendications 4 à 8, dans lequel ledit premier élément de mécanisme de verrouillage (6a) est libéré dudit second élément de mécanisme de verrouillage (6b) lorsque ledit élément de mécanisme de verrouillage (6a, 6b) sollicité de manière élastique est déplacé à l'encontre de la sollicitation exercée sur lui.

10. Ensemble plateau (1) selon l'une quelconque des revendications précédentes, dans lequel ledit couvercle (3) est poussé vers ladite position déployée (P2) au moyen d'un ressort (11) sollicité de manière élastique et s'étendant entre ledit plateau (2) et ledit couvercle (3).

11. Ensemble plateau (1) selon l'une quelconque des revendications précédentes, dans lequel ledit plateau (2) et ledit couvercle (3) sont configurés pour se déplacer à l'unisson lorsque ledit couvercle (3) a atteint ladite position déployée (P2) ou ladite position rétractée (P1).

12. Ensemble plateau (1) selon l'une quelconque des revendications précédentes, dans lequel ledit plateau (2) est pourvu de moyens d'arrêt (12) configurés de manière à empêcher que ledit couvercle (3) se détache dudit plateau (2) lorsqu'il se trouve dans ladite position déployée (P2).

13. Dispositif électronique (13) configuré pour recevoir un ensemble plateau (1) selon l'une quelconque des revendications 8 à 12, ledit dispositif électronique comprenant un boîtier (14), des plots de contact et/ou des ressorts de contact de boîtier (15) et un processeur, ledit processeur étant conçu pour activer un actionneur électromécanique (7) dudit ensemble plateau (1) en réponse à un signal utilisateur d'éjection de plateau et au moyen d'un signal de déverrouillage transmis depuis lesdits plots de contact de boîtier (15) vers des plots et/ou des ressorts de contact (10) disposés sur ledit ensemble plateau (1).

14. Dispositif électronique (13) selon la revendication 13, dans lequel lesdits plots de contact et/ou ressorts de contact de boîtier (15) sont conçus pour être en contact avec les plots et/ou ressorts de contact (10) disposés sur ledit plateau (2) lorsque ledit couvercle (3) se trouve dans ladite position rétractée (P1).

15. Dispositif électronique (13) selon la revendication 13 ou 14, comprenant en outre un moyen permettant d'interrompre la transmission dudit signal de déverrouillage depuis lesdits plots de contact et/ou ressorts de contact de boîtier (15) vers les plots et/ou ressorts de contact (10).
